# EUROPEAN PATENT APPLICATION

(11) **EP 4 718 534 A1**
(43) Date of publication of application: **01.04.2026**
(21) Application number: 23938959.6
(22) Date of filing: 01.06.2023
(51) Int. Cl.: H01M 4/525

(54) **POSITIVE ELECTRODE ACTIVE MATERIAL, PREPARATION METHOD THEREFOR, SECONDARY BATTERY, AND ELECTRICAL APPARATUS**

(71) Applicant: Contemporary Amperex Technology Co., Limited, Ningde, Fujian 352100 (CN); Shanghai Jiao Tong University, Shanghai 200240 (CN)
(72) Inventor: SHEN, Chongheng, Ningde, Fujian 352100 (CN); LI, Zhiyuan, Shanghai 200240 (CN); WANG, Jing, Ningde, Fujian 352100 (CN); WANG, Yong, Shanghai 200240 (CN); LI, Linsen, Shanghai 200240 (CN); HUAN, Shuxing, Ningde, Fujian 352100 (CN); LIU, Na, Ningde, Fujian 352100 (CN)
(74) Representative: Ziebig Hengelhaupt Intellectual Property Attorneys Patentanwaltskanzlei PartGmbB
(86) International application number: PCT/CN2023/097890
(87) International publication number: WO 2024/243972

(57) **Abstract**

This disclosure provides a positive electrode active material, a preparation method thereof, a secondary battery, and an electric apparatus. The positive electrode active material is an agglomerate of primary particles. The positive electrode active material internally contains pores located between the primary particles, and the longest connected distance of the pores is not less than 0.5 µm, optionally 1 µm to 5 µm. The positive electrode active material provided by this disclosure can provide expansion space for the anisotropic volume changes of the primary particles inside the positive electrode active material during cycling, thereby extending the cycle life of a battery. In addition, the interconnected pores are conducive to shortening a transmission path for metal ions (such as lithium ions) within the positive electrode active material, facilitating the deintercalation and intercalation of the metal ions, and further enhancing the kinetic performance of the battery and facilitating the capacity utilization of the battery.

## Description

### TECHNICAL FIELD

This application relates to the technical field of secondary battery technologies, and in particular, to a positive electrode active material and a preparation method thereof, a secondary battery, and an electric apparatus.

### BACKGROUND

In recent years, with the widespread application of secondary batteries in energy storage power systems such as hydroelectric, thermal, wind, and solar power plants, and many other fields including electric tools, electric bicycles, electric motorcycles, electric vehicles, military equipment, and aerospace, the market has imposed increasingly high performance requirements on secondary batteries.

Electrode materials with high specific capacity often exhibit low material stability, which affects the cycle life of batteries. How to simultaneously improve the specific capacity and cycle life of batteries is a technical problem that needs to be solved urgently in the art.

### SUMMARY

This application is made in view of the above issues, with an objective to provide a positive electrode active material to achieve simultaneous improvement in specific capacity and cycle life of a battery.

According to a first aspect of this application, a positive electrode active material is provided, where the positive electrode active material is an agglomerate of primary particles, the positive electrode active material internally contains pores located between the primary particles, and the longest connected distance of the pores is not less than 0.5 µm, optionally 1 µm to 5 µm.

The pores between the primary particles inside the positive electrode active material provided by this application are interconnected, with the longest connected distance not less than 0.5 µm, which can provide expansion space for the anisotropic volume changes of the primary particles inside the positive electrode active material during cycling, thereby extending the cycle life of a battery. In addition, the interconnected pores are conducive to shortening a transmission path for active ions (such as lithium ions) within the positive electrode active material, facilitating the deintercalation and intercalation of the metal ions, and further enhancing the kinetic performance of the battery and facilitating the capacity utilization of the battery.

In any embodiment, a cross-sectional diameter of the pores is 10 nm to 350 nm, optionally 20 nm to 200 nm.

The cross-sectional diameter of the pores between the primary particles being 10 nm to 350 nm is conducive to improving transmission and diffusion velocities of active ions (such as lithium ions) in an electrode plate, improving the first-cycle coulombic efficiency (referred to as "first-cycle efficiency") of the battery, facilitating capacity utilization of the battery, and extending the cycle life of the battery. When the diameter of the pores between the primary particles is 20 nm to 200 nm, the characteristics of high lithium-ion diffusion efficiency and large battery capacity can be fully utilized, and the adverse effect of large-diameter pores on the cycle life can be reduced, allowing the battery to have both excellent capacity and cycling stability.

In any embodiment, a cross-sectional porosity of the positive electrode active material is 3% to 12%, optionally 4% to 9%.

When the cross-sectional porosity of the positive electrode active material is 3% to 12%, sufficient ion transmission channels are provided, facilitating rapid intercalation/deintercalation of metal ions, and helping to improve the first-cycle efficiency and specific capacity of the battery. Additionally, an appropriate cross-sectional porosity can provide sufficient space for the deformation of the positive electrode active material during cycling, extending the cycle life of the battery. When the cross-sectional porosity of the positive electrode active material is 4% to 9%, the characteristics of high lithium-ion diffusion efficiency and large battery capacity can be fully utilized, and the adverse effect of high porosity on the cycle life of the battery can be reduced, allowing the battery to have both excellent capacity and cycling stability.

In any embodiment, a porosity of the positive electrode active material decreases along a direction from a geometric center of the positive electrode active material to a surface of the positive electrode active material.

Metal ions at the center of the positive electrode active material require a longer diffusion distance, and a higher porosity inside the positive electrode active material facilitates the diffusion of metal ions within the material, facilitating capacity realization of the battery. During cycling, the center of the positive electrode active material experiences strong stress and large strain. The porosity of the positive electrode active material decreasing along the direction from the geometric center of the positive electrode active material to the surface of the positive electrode active material helps the positive electrode active material maintain stable morphology during cycling, reducing the probability of cracks induced by the center of the positive electrode active material, and helping to extend the cycle life of the battery.

In any embodiment, a relationship between a cross-sectional porosity Po(C100) within a 100% concentric circle range of the positive electrode active material and a cross-sectional porosity Po(C64) within a 64% concentric circle range on a same cross-section satisfies Po(C64)/Po(C100) ≥ 1.10. The 100% concentric circle range of the positive electrode active material is a region within a distance of r from the geometric center of the positive electrode active material, where r represents a radius of the positive electrode active material. The 64% concentric circle range of the positive electrode active material is a region within a distance of 0.8r from the geometric center of the positive electrode active material.

In any embodiment, a relationship between a cross-sectional porosity Po(C100) within a 100% concentric circle range of the positive electrode active material and a cross-sectional porosity Po(C36) within a 36% concentric circle range on a same cross-section satisfies Po(C36)/Po(C100) ≥ 1.20. The 36% concentric circle range of the positive electrode active material is a region within a distance of 0.6r from the geometric center of the positive electrode active material, where r represents a radius of the positive electrode active material.

In any embodiment, based on a total mass of the positive electrode active material, a residual lithium content of the positive electrode active material is 500 ppm to 3500 ppm, optionally 1000 ppm to 2100 ppm.

A residual lithium content within an appropriate range can achieve the cleanliness of the surface of the positive electrode active material and improve the morphology and structure retention of the positive electrode active material, thereby achieving comprehensive improvements in capacity and cycling stability of the battery.

In any embodiment, a general formula of the positive electrode active material is as shown in Formula I:

LiₐNiₓM₁₋ₓO_{2-b} Formula I,

where M includes at least one of Co, Mn, Al, Y, W, Ta, Mo, Ce, La, Zr, Sr, Y, Sb, W, Ti, Mg, Nb, K, and Ca; 0.5 ≤ a ≤ 1.2, 0.5 ≤ x < 1.0, and -0.1 ≤ b ≤ 0.1; and optionally, 0.8 ≤ a ≤ 1.2, and 0.8 ≤ x < 1.0.

In any embodiment, the positive electrode active material satisfies at least one of the following conditions:
(i) a specific surface area of the positive electrode active material is 0.4 cm²/g to 5 cm²/g;
(ii) an average particle size of the primary particles is 10 nm to 200 nm; and
(iii) a tap density of the positive electrode active material is 1.7 g/cm³ to 2.3 g/cm³.

According to a second aspect of this application, a preparation method of a positive electrode active material is provided, including: mixing a positive electrode active material precursor, a lithium salt, and a flux for a sintering reaction to prepare the positive electrode active material, where the positive electrode active material is an agglomerate of primary particles, the positive electrode active material internally contains pores located between the primary particles, and the longest connected distance of the pores is greater than 0.5 µm.

During the preparation of the positive electrode active material, co-sintering of the flux with the positive electrode active material precursor and the lithium salt can successfully prepare a positive electrode active material with interconnected internal pores and the longest connected distance not less than 0.5 µm, effectively improving the first-cycle efficiency, capacity, and cycle life of the battery.

In any embodiment, the flux includes an alkali metal salt, optionally one or more of alkali metal sulfates and alkali metal acetates; and optionally, the flux includes one or more of potassium sulfate, lithium sulfate, sodium sulfate, potassium acetate, lithium acetate, and sodium acetate.

In any embodiment, a general formula of the positive electrode active material precursor is as shown in Formula II:

Ni_{y}M_{1-y}(OH)₂ Formula II,

where M includes at least one of Co, Mn, Al, Y, W, Ta, Mo, Ce, La, Zr, Sr, Y, Sb, W, Ti, Mg, Nb, K, and Ca; and 0.5 ≤ y < 1.0, optionally 0.8 ≤ y < 1.0.

In any embodiment, a molar ratio of the flux to the positive electrode active material precursor is (0.05 to 0.3):1, optionally (0.08 to 0.2):1.

The molar ratio of the flux to the positive electrode active material precursor being (0.05 to 0.3):1 allows the positive electrode active material to have an appropriate pore structure, improving the capacity and cycle life of the battery. When the molar ratio of the flux to the positive electrode active material precursor is (0.08 to 0.2):1, the battery has both excellent capacity and cycle life.

In any embodiment, a temperature of the sintering reaction is 500°C to 800°C, optionally 650°C to 800°C; and/or a duration of the sintering reaction is 10 h to 15 h, optionally 12 h to 14 h.

In any embodiment, the preparation method of the positive electrode active material specifically includes: under an oxygen atmosphere, mixing the positive electrode active material precursor, the lithium salt, and the flux for the sintering reaction, followed by water washing to obtain an intermediate product; and under the oxygen atmosphere, calcining the intermediate product to prepare the positive electrode active material.

In any embodiment, a temperature of the water washing is 4°C to 10°C.

The temperature of the water washing has a significant impact on the performance of the battery. The temperature of the water washing above 10°C causes the pores in the positive electrode active material to become larger and the porosity to increase. Meanwhile, the temperature of the water washing above 10°C may lead to over-washing of the positive electrode active material, causing changes in the composition and structure of the surface of the positive electrode active material, reducing the electronic conductivity of a material with an excessively low lithium content and an excessively high nickel content, significantly increasing the internal resistance of the battery, and decreasing the capacity and cycle life. The temperature of the water washing below 4°C cannot ensure the removal of impurities from the surface of the positive electrode active material, affecting the interconnectivity of the pores; and residual impurity compounds on the surface have an adverse effect on the subsequent production and preparation of the battery. The temperature of the water washing within an appropriate range can achieve the cleanliness of the surface of the positive electrode active material and maintain the morphology and structure of the product, thereby achieving comprehensive improvements in the capacity and cycling stability of the battery.

In any embodiment, a temperature of the calcination is 500°C to 650°C, and/or a duration of the calcination is 2 h to 5 h.

According to a third aspect of this application, a secondary battery is provided, including a positive electrode plate, where the positive electrode plate includes the positive electrode active material according to any embodiment or a positive electrode active material prepared using the preparation method according to any embodiment.

According to a fourth aspect of this application, an electric apparatus is provided, including the secondary battery according to any embodiment.

### BRIEF DESCRIPTION OF DRAWINGS

FIG. 1 is a scanning electron microscope image of a cross-section of a positive electrode active material in Example 9;
FIG. 2 is a scanning electron microscope image of a cross-section of a positive electrode active material in Comparative Example 2;
FIG. 3 is a comparison chart of first-cycle charge-discharge curves of batteries in Example 9 and Comparative Example 2;
FIG. 4 is a comparison chart of cycling stability of batteries in Example 9 and Comparative Example 2;
FIG. 5 is a scanning electron microscope image of a cross-section of a positive electrode plate in Example 9 after 300 cycles during testing;
FIG. 6 is a scanning electron microscope image of a cross-section of a positive electrode plate in Comparative Example 2 after 300 cycles during testing;

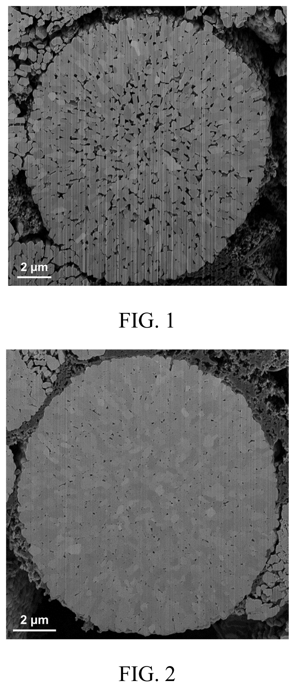

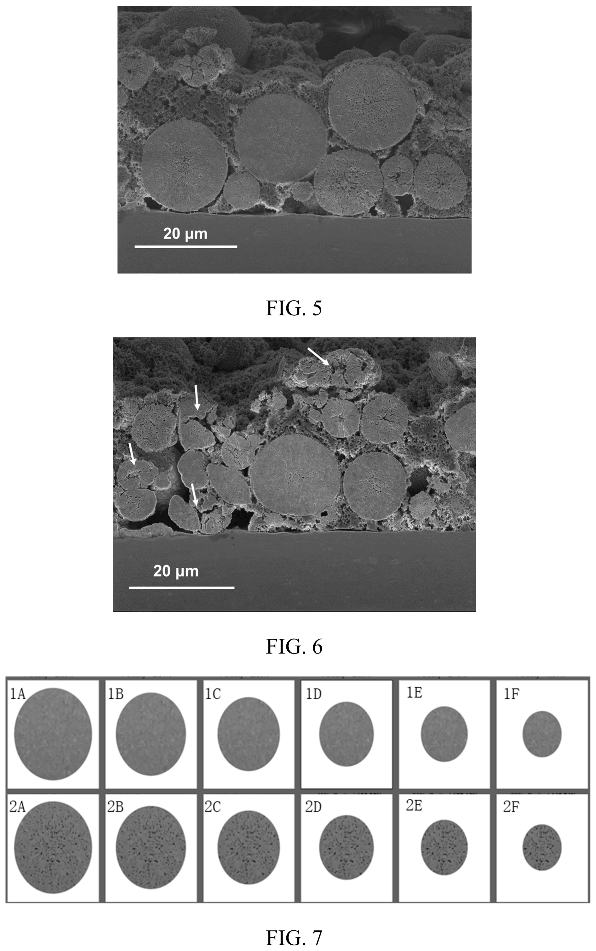

FIG. 7 is an analysis diagram of cross-sectional porosities of positive electrode active materials in Comparative Example 2 and Example 9 in different concentric circle area ranges, where figures 1A, 1B, 1C,1D, 1E, and 1F are cross-sectional analysis diagrams of the positive electrode active material in Comparative Example 2 within 100%, 81%, 64%, 49%, 36%, and 25% concentric circle ranges respectively, and figures 2A, 2B, 2C, 2D, 2E, and 2F are cross-sectional analysis diagrams of the positive electrode active material in Example 9 within 100%, 81%, 64%, 49%, 36%, and 25% concentric circle ranges respectively;
FIG. 8 is a schematic diagram of a battery pack according to an embodiment of this application;
FIG. 9 is an exploded view of the battery pack shown in FIG. 8 according to an embodiment of this application; and
FIG. 10 is a schematic diagram of an electric apparatus using a secondary battery as a power source according to an embodiment of this application.

Description of reference signs:
1. battery pack; 2. upper box body; 3. lower box body; 4. battery module; 5. secondary battery; 51. housing; 52. electrode assembly; and 53. top cover assembly.

### DESCRIPTION OF EMBODIMENTS

Embodiments that specifically disclose a positive electrode active material and a preparation method thereof, a secondary battery, and an electric apparatus of this application are described below in detail with appropriate reference to the drawings. However, unnecessary detailed descriptions may be omitted. For example, detailed descriptions of well-known matters and repeated descriptions of substantially identical structures may be omitted. This is to avoid making the following description unnecessarily lengthy and to facilitate understanding by those skilled in the art. Furthermore, the drawings and the following description are provided to enable those skilled in the art to fully understand this application and are not intended to limit the subject matter described in the claims.

The "ranges" disclosed in this application are defined in the form of lower and upper limits, and a given range is defined by selecting a lower limit and an upper limit, where the selected lower and upper limits define boundaries of that special range. Ranges defined in this manner may include or exclude the endpoints and can be arbitrarily combined, meaning that any lower limit can be combined with any upper limit to form a range. For example, if ranges of 60-120 and 80-110 are listed for a specific parameter, it is understood that ranges of 60-110 and 80-120 are also anticipated. Additionally, if minimum range values of 1 and 2 are listed, and maximum range values of 3, 4, and 5 are listed, the following ranges are all anticipated: 1-3, 1-4, 1-5, 2-3, 2-4, and 2-5. In this application, unless otherwise specified, the numerical range "a-b" represents an abbreviated representation of any combination of real numbers between a and b, where both a and b are real numbers. For example, the numerical range "0-5" means that all real numbers between "0-5" have been listed herein, and "0-5" is merely an abbreviated representation of these numerical combinations. Additionally, when a parameter is expressed as an integer greater than or equal to 2, it is equivalent to disclosing that the parameter is, for example, an integer among 2, 3, 4, 5, 6, 7, 8, 9, 10, 11, 12, and so on.

Unless otherwise specified, all embodiments and optional embodiments of this application can be combined with each other to form new technical solutions.

Unless otherwise specified, all technical features and optional technical features of this application can be combined with each other to form new technical solutions.

Unless otherwise specified, all steps in this application can be performed sequentially or randomly, preferably sequentially. For example, the method including steps (a) and (b) indicates that the method may include steps (a) and (b) performed sequentially, or steps (b) and (a) performed sequentially. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, the terms "include" and "comprise" mentioned in this application indicate an open-ended or closed-ended inclusion. For example, "include" and "comprise" may indicate that other components not listed may also be included or comprised, or only the listed components may be included or comprised.

Unless otherwise specified, the term "or" in this application is inclusive. For example, the phrase "A or B" means "A, B, or both A and B." More specifically, any of the following conditions satisfy the condition "A or B": A is true (or present) and B is false (or not present); A is false (or not present) and B is true (or present); or both A and B are true (or present).

With the increasing demand for the endurance time or mileage of various electric apparatuses, higher requirements have been imposed on the capacity and cycling performance of secondary batteries. Positive electrode active materials with high specific capacity are prone to anisotropic volume changes during cycling, leading to anisotropic stress within the positive electrode active materials, causing fragmentation of particles of the positive electrode active materials, rapid deterioration of the performance of the batteries, and decrease in the cycle life of the batteries.

### [Positive electrode active material]

Based on this, this application provides a positive electrode active material, where the positive electrode active material is an agglomerate of primary particles, the positive electrode active material internally contains pores located between the primary particles, and the longest connected distance of the pores is not less than 0.5 µm, optionally 1 µm to 5 µm.

In some embodiments, the longest connected distance of the pores is optionally 0.5 µm, 1 µm, 1.5 µm, 2 µm, 2.5 µm, 3 µm, 3.5 µm, 4 µm, 4.5 µm, 5 µm, or any value therebetween.

The longest connected distance of the pores can be tested using methods known in the art. As an example, the longest connected distance of the pores can be determined by performing ultra-thin slicing of the positive electrode active material at a certain step length through a focused ion beam (FIB), and scanning electron microscope images (SEM) of the resulting slices are sequentially captured; 3D reconstruction software is used to align the collected focused ion beam-scanning electron microscope images; after the alignment, three-dimensional reconstruction is performed to obtain three-dimensional images of particles of the positive electrode active material. Based on the reconstruction results, the pore distribution within a three-dimensional image of the positive electrode active material is obtained, and the longest connected distance of the pores is read. The step length for the ultra-thin slicing of the positive electrode active material using the focused ion beams (FIB) is optionally 20 nm. The pores between the primary particles inside the positive electrode active material provided by this application are interconnected, with the longest connected distance not less than 0.5 µm, which can provide expansion space for the anisotropic volume changes of the primary particles inside the positive electrode active material during cycling, thereby extending the cycle life of a battery. In addition, the interconnected pores are conducive to shortening a transmission path for metal ions (such as lithium ions) within the positive electrode active material, facilitating the deintercalation and intercalation of the metal ions, and further enhancing the kinetic performance of the battery and facilitating the capacity utilization of the battery.

In some embodiments, a cross-sectional diameter of the pores between the primary particles is 10 nm to 350 nm, optionally 20 nm to 200 nm.

In some embodiments, the cross-sectional diameter of the pores between the primary particles is optionally 10 nm, 15 nm, 20 nm, 30 nm, 40 nm, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200 nm, 210 nm, 220 nm, 230 nm, 240 nm, 250 nm, 260 nm, 270 nm, 280 nm, 290 nm, 300 nm, 310 nm, 320 nm, 330 nm, 340 nm, 350 nm, or any value therebetween.

The cross-sectional diameter of the pores between the primary particles can be tested using methods known in the art. As an example, the cross-sectional diameter of the pores between the primary particles can be obtained through image processing analysis of a cross-section of the positive electrode active material. An electrode plate is subjected to tri-ion beam cutting to obtain a smooth cross-section exposing the cross-section of the positive electrode active material; a scanning electron microscope (SEM) is used to capture a cross-sectional SEM image from a cross-sectional image, and the diameter of the pores between the primary particles is measured, with the longest diameter of each pore taken as a cross-sectional diameter of the pore.

The cross-sectional diameter of the pores between the primary particles being 10 nm to 350 nm is conducive to improving transmission and diffusion velocities of metal ions (such as lithium ions) in the electrode plate, improving the first-cycle coulombic efficiency of the battery, facilitating capacity utilization of the battery, and extending the cycle life of the battery. When the diameter of the pores between the primary particles is 20 nm to 200 nm, the characteristics of high lithium-ion diffusion efficiency and large battery capacity can be fully utilized, and the adverse effect of large-diameter pores on the cycle life can be reduced, allowing the battery to have both excellent capacity and cycling stability.

In some embodiments, a cross-sectional porosity of the positive electrode active material is 3% to 12%, optionally 4% to 9%.

In some embodiments, the cross-sectional porosity of the positive electrode active material is optionally 3%, 4%, 5%, 6%, 7%, 8%, 9%, 10%, 11%, 12%, or any value therebetween.

The cross-sectional porosity of the positive electrode active material can be tested using methods known in the art. As an example, the cross-sectional porosity of the positive electrode active material can be obtained through image processing analysis of a cross-section of the positive electrode active material. An electrode plate is subjected to tri-ion beam cutting to obtain a smooth cross-section exposing an internal structure of the positive electrode active material; a scanning electron microscope (SEM) is used to capture a cross-sectional image, and ImageJ software is used to perform threshold segmentation on the obtained scanning image characterizing the interior of the positive electrode active material, where gray-white contrast regions represent particles, and black contrast regions represent pores. A ratio of areas of the black contrast regions to a total area of the positive electrode active material within the range of the positive electrode active material is taken as the cross-sectional porosity of the positive electrode active material.

When the cross-sectional porosity of the positive electrode active material is 3% to 12%, sufficient ion transmission channels are provided, facilitating rapid intercalation/deintercalation of metal ions, and helping to improve the first-cycle efficiency and specific capacity of the battery. Additionally, an appropriate cross-sectional porosity can provide sufficient space for the deformation of the positive electrode active material during cycling, extending the cycle life of the battery. When the cross-sectional porosity of the positive electrode active material is 4% to 9%, the characteristics of high lithium-ion diffusion efficiency and large battery capacity can be fully utilized, and the adverse effect of large porosity on the cycle life of the battery can be reduced, allowing the battery to have both excellent capacity and cycling stability.

In some embodiments, a porosity of the positive electrode active material decreases along a direction from a geometric center of the positive electrode active material to a surface of the positive electrode active material.

The porosity of the positive electrode active material can be tested using any known method. To facilitate the statistical analysis of porosities in different regions within the positive electrode active material, a concentric circle method can be used for characterization. As an example, a focused ion beam (FIB) is used to perform ultra-thin slicing of the positive electrode active material at a certain step length, and scanning electron microscope images (SEM) of the resulting slices are sequentially captured; 3D reconstruction software is used to perform three-dimensional reconstruction of focused ion beam-scanning electron microscope results to obtain a three-dimensional image of the interior of the positive electrode active material. The three-dimensional image of the positive electrode active material is subjected to cross-sectional cutting through the geometric center to obtain an internal cross-section of the positive electrode active material. The geometric centers of particles of the positive electrode active material are used as the centers, circles are drawn with different radii, and cross-sectional porosities within different radius ranges on a same cross-sectional image are calculated. If a cross-sectional porosity in a smaller radius range is greater than a cross-sectional porosity in a larger radius range in a same cross-sectional image, it indicates that the porosity of the positive electrode active material decreases along the direction from the geometric center of the positive electrode active material to the surface of the positive electrode active material.

Metal ions at the center of the positive electrode active material require a longer diffusion distance, and a higher porosity inside the positive electrode active material facilitates the diffusion of metal ions within the material, facilitating capacity utilization of the battery. During cycling, the center of the positive electrode active material experiences strong stress and large strain. The porosity of the positive electrode active material decreasing along the direction from the geometric center of the positive electrode active material to the surface of the positive electrode active material helps the positive electrode active material maintain stable morphology during cycling, reducing the probability of cracks induced by the center of the positive electrode active material, and helping to extend the cycle life of the battery.

In some embodiments, a relationship between a cross-sectional porosity Po(C100) within a 100% concentric circle range of the positive electrode active material and a cross-sectional porosity Po(C64) within a 64% concentric circle range on a same cross-section satisfies Po(C64)/Po(C100) ≥ 1.10. The 100% concentric circle range of the positive electrode active material is a region within a distance of r from the geometric center of the positive electrode active material, and the 64% concentric circle range of the positive electrode active material is a region within a distance of 0.8r from the geometric center of the positive electrode active material, where r represents a radius of the positive electrode active material.

In some embodiments, a relationship between the cross-sectional porosity Po(C100) within the 100% concentric circle range of the positive electrode active material and a cross-sectional porosity Po(C36) within a 36% concentric circle range on a same cross-section satisfies Po(C36)/Po(C100) ≥ 1.20. The 36% concentric circle range of the positive electrode active material is a region within a distance of 0.6r from the geometric center of the positive electrode active material, where r represents a radius of the positive electrode active material.

In some embodiments, based on a total mass of the positive electrode active material, a residual lithium content of the positive electrode active material is 500 ppm to 3500 ppm, optionally 1000 ppm to 2100 ppm.

In some embodiments, based on the total mass of the positive electrode active material, the residual lithium content of the positive electrode active material is optionally 500 ppm, 1000 ppm, 1500 ppm, 2000 ppm, 2100 ppm, 2500 ppm, 3000 ppm, 3500 ppm, or any value therebetween.

The residual lithium content of the positive electrode active material can be tested with reference to GB/T 9736-2008 General Method for Determination of Acidity and Alkalinity of Chemical Reagents. The method includes: weighing 10 g to 30 g of the positive electrode active material, adding 100 ml of pure water, stirring for 30 min, standing for 10 min, filtering, and then pipetting a certain amount of filtrate; selecting a 0.05 mol/L hydrochloric acid standard solution, removing air bubbles from a titration tube by draining; and then selecting a corresponding sensor and program initial potential for performing titration testing. The residual lithium content is calculated by dividing a measured total mass of lithium carbonate and lithium bicarbonate by a mass of the positive electrode active material.

The residual lithium content on the surface of the positive electrode active material has a significant impact on the performance of the battery. During the preparation of a high-nickel positive electrode active material, an excessive lithium source is often added to avoid aggravated cation mixing due to lithium evaporation during calcination, but the excessive lithium source may be converted into residual lithium compounds such as lithium carbonate and lithium bicarbonate and remain on the surface of the positive electrode active material. The residual lithium compounds on the surface of the positive electrode active material may cause gelation of a slurry, make it difficult to apply the slurry, and cause side reactions during electrochemical reactions, deteriorating electrochemical performance and causing safety issues. Since lithium carbonate, lithium bicarbonate, and other residual lithium compounds are easily soluble in water, water washing is an effective means to remove residual lithium from the positive electrode active material. Excessive washing helps to effectively remove residual lithium from the surface of the positive electrode active material, but causes changes in the composition and structure of the surface of the positive electrode active material, reducing the electronic conductivity of a material with an excessively low lithium content and an excessively high nickel content, significantly increasing the internal resistance of the battery, and decreasing the capacity and cycle life.

A residual lithium content within an appropriate range can achieve the cleanliness of the surface of the positive electrode active material and improve the morphology and structure retention of the positive electrode active material, thereby achieving comprehensive improvements in capacity and cycling stability of the battery.

In some embodiments, a general formula of the positive electrode active material is as shown in Formula I:

LiₐNiₓM₁₋ₓO_{2-b} Formula I,

where M includes at least one of Co, Mn, Al, Y, W, Ta, Mo, Ce, La, Zr, Sr, Y, Sb, W, Ti, Mg, Nb, K, and Ca; 0.5 ≤ a ≤ 1.2, 0.5 ≤ x < 1.0, and -0.1 ≤ b ≤ 0.1; optionally, 0.8 ≤ a ≤ 1.2, and 0.8 ≤ x < 1.0.

In some embodiments, a is optionally 0.5, 0.6, 0.7, 0.8, 0.9, 1, 1.1, 1.2, or any value therebetween.

In some embodiments, x is optionally 0.5, 0.6, 0.7, 0.8, 0.9, or any value therebetween.

In some embodiments, b is optionally -0.1, -0.005, 0, 0.005, or 0.1.

In some embodiments, a specific surface area of the positive electrode active material is 0.4 cm²/g to 5 cm²/g.

The specific surface area of the positive electrode active material can be tested using any known method. For example, the specific surface area of the positive electrode active material can be tested with reference to GB/T 19587-2017 Determination of Specific Surface Area of Solid Substances by Gas Adsorption BET Method. As an example, the specific surface area of the positive electrode active material is measured using a TriStar II 3020 device. The positive electrode active material is dispersed in a dispersant such as ethanol and subjected to ultrasonication for 30 minutes. Then, the material is dried in a vacuum drying oven. Finally, the specific surface area of the positive electrode active material is measured using a specific surface area tester.

In some embodiments, the specific surface area of the positive electrode active material is optionally 0.4 cm²/g, 0.6 cm²/g, 0.8 cm²/g, 1 cm²/g, 1.5 cm²/g, 2 cm²/g, 2.5 cm²/g, 3 cm²/g, 3.5 cm²/g, 4 cm²/g, 4.5 cm²/g, 5 cm²/g, or any value therebetween.

The positive electrode active material provided by this disclosure has a high specific surface area, which is conducive to efficient transmission of metal ions, improving the overall performance of the battery.

In some embodiments, an average particle size of the primary particles is 10 nm to 200 nm.

In some embodiments, the average particle size of the primary particles is optionally 10 nm, 20 nm, 30 nm, 40 nm, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200 nm, or any value therebetween.

The average particle size of the primary particles can be measured using any known method. As an example, the test method for the average particle size of the primary particles is as follows: The positive electrode active material is cut using a cross-section polisher (CP) to obtain a sample where cross-sections of the primary particles of the positive electrode active material can be observed. A scanning electron microscope (SEM) is used to shoot the cross-section and obtain a scanning electron microscope image of the cross-section, and 100 primary particles are randomly selected from the obtained scanning electron microscope image. Particle boundaries of the selected 100 primary particles are observed to determine the morphology of the primary particles. The longest diameters of the 100 primary particles are statistically measured, and an average of these longest diameters is taken as the average particle size of the primary particles.

The average particle size of the primary particles within this range ensures that the diffusion distance of lithium ions is not too long, facilitating the deintercalation and intercalation of lithium ions, and helping to improve the capacity and cycling performance of the battery.

In some embodiments, a tap density of the positive electrode active material is 1.7 g/cm³ to 2.3 g/cm³.

In some embodiments, the tap density of the positive electrode active material is 1.7 g/cm³, 1.8 g/cm³, 1.9 g/cm³, 2.0 g/cm³, 2.1 g/cm³, 2.2 g/cm³, 2.3 g/cm³, or any value therebetween.

The tap density of the positive electrode active material can be measured using any known method. As an example, the tap density of the positive electrode active material can be measured using a Dandong Bettersize BT-300 tap density tester with reference to GB/T 5162-2006 Determination of Tap Density of Metal Powder.

The positive electrode active material with the tap density within the above range can enable the battery to have a certain loading capacity, guarantee a volumetric energy density of the battery, achieve rapid transmission of metal ions, facilitate the capacity utilization of the battery, and improve the overall performance of the battery.

According to a second aspect of this application, a preparation method of a positive electrode active material is provided, including: mixing a positive electrode active material precursor, a lithium salt, and a flux for a sintering reaction to prepare the positive electrode active material, where the positive electrode active material is an agglomerate of primary particles, the positive electrode active material internally contains pores located between the primary particles, and the longest connected distance of the pores is greater than 0.5 µm.

In some embodiments, the flux includes an alkali metal salt, optionally one or more of alkali metal sulfates and alkali metal acetates; and optionally, the flux includes one or more of potassium sulfate, lithium sulfate, sodium sulfate, potassium acetate, lithium acetate, and sodium acetate.

The alkali metal salt refers to an acid salt including six alkali metal elements: lithium (Li), sodium (Na), potassium (K), rubidium (Rb), cesium (Cs), and francium (Fr). The alkali metal sulfates include lithium sulfate, sodium sulfate, potassium sulfate, and the like. The alkali metal acetates include lithium acetate, sodium acetate, potassium acetate, and the like.

During the preparation of the positive electrode active material, co-sintering of the flux with the positive electrode active material precursor and the lithium salt can successfully prepare a positive electrode active material with interconnected internal pores and the longest connected distance not less than 0.5 µm, effectively improving the first-cycle efficiency, capacity, and cycle life of the battery.

In some embodiments, a general formula of the positive electrode active material precursor is as shown in Formula II:

Ni_{y}M_{1-y}(OH)₂ Formula II,

where M includes at least one of Co, Mn, Al, Y, W, Ta, Mo, Ce, La, Zr, Sr, Y, Sb, W, Ti, Mg, Nb, K, and Ca; and 0.5 ≤ y < 1.0, optionally 0.8 ≤ y < 1.0.

In some embodiments, y is optionally 0.5, 0.6, 0.7, 0.8, 0.9, or any value therebetween.

In some embodiments, a molar ratio of the flux to the positive electrode active material precursor is (0.05 to 0.3):1, optionally (0.08 to 0.2):1.

In some embodiments, the molar ratio of the flux to the positive electrode active material precursor is optionally 0.05, 0.1, 0.15, 0.2, 0.25, 0.3, or any value therebetween.

The molar ratio of the flux to the positive electrode active material precursor being (0.05 to 0.3):1 allows the positive electrode active material to have an appropriate pore structure, improving the capacity and cycle life of the battery. When the molar ratio of the flux to the positive electrode active material precursor is (0.08 to 0.2):1, the battery can simultaneously exhibit excellent capacity and cycle life.

In some embodiments, a temperature of the sintering reaction is 500°C to 800°C, optionally 650°C to 800°C; and a duration of the sintering reaction is 10 h to 15 h, optionally 12 h to 14 h.

In some embodiments, the temperature of the sintering reaction is optionally 500°C, 550°C, 600°C, 650°C, 700°C, 750°C, 800°C, or any value therebetween.

In some embodiments, the duration of the sintering reaction is optionally 10 h, 11 h, 12 h, 13 h, 14 h, 15 h, or any value therebetween.

In some embodiments, the preparation method of the positive electrode active material specifically includes: under an oxygen atmosphere, mixing the positive electrode active material precursor, the lithium salt, and the flux for the sintering reaction, followed by water washing to obtain an intermediate product; and under the oxygen atmosphere, calcining the intermediate product to prepare the positive electrode active material.

To reduce the impact of flux impurities on a surface of the positive electrode active material on battery performance, a simple water washing process is required to remove the flux. However, the water washing process introduces oxygen-containing functional groups on the surface of the positive electrode active material. The calcination process after water washing can effectively remove the oxygen-containing functional groups introduced by the water washing process on the surface of the positive electrode active material, reducing the adverse effect of oxygen-containing functional groups on the performance of the battery.

In some embodiments, a temperature of the water washing is 4°C to 10°C.

In some embodiments, the temperature of the water washing is optionally 4°C, 5°C, 6°C, 7°C, 8°C, 9°C, or 10°C.

The temperature of the water washing has a significant impact on the performance of the battery. The temperature of the water washing above 10°C causes the pores in the positive electrode active material to become larger and the porosity to increase. Meanwhile, the temperature of the water washing above 10°C may lead to over-washing of the positive electrode active material, causing changes in the composition and structure of the surface of the positive electrode active material, reducing the electronic conductivity of a material with an excessively low lithium content and an excessively high nickel content, significantly increasing the internal resistance of the battery, and decreasing the capacity and cycle life. The temperature of the water washing below 4°C cannot ensure the removal of impurities from the surface of the positive electrode active material, affecting the interconnectivity of the pores; and residual impurity compounds on the surface have an adverse effect on the subsequent production and preparation of the battery. The temperature of the water washing within an appropriate range can achieve the cleanliness of the surface of the positive electrode active material and maintain the morphology and structure of the product, thereby achieving comprehensive improvements in the capacity and cycling stability of the battery.

In some embodiments, a temperature of the calcination is 500°C to 650°C, and/or a duration of the calcination is 2 h to 5 h.

In some embodiments, the temperature of the calcination is optionally 500°C, 550°C, 600°C, 650°C, or any value therebetween.

In some embodiments, the duration of the calcination is optionally 2 h, 3 h, 4 h, 5 h, or any value therebetween.

According to an embodiment of this application, a secondary battery is provided, including a positive electrode plate, where the positive electrode plate includes the positive electrode active material according to any embodiment or a positive electrode active material prepared using the preparation method according to any embodiment.

Typically, a secondary battery includes a positive electrode plate, a negative electrode plate, an electrolyte, and a separator. During charging and discharging of the battery, active ions intercalate and deintercalate back and forth between the positive electrode plate and the negative electrode plate. The electrolyte serves to conduct ions between the positive electrode plate and the negative electrode plate. The separator is disposed between the positive electrode plate and the negative electrode plate, primarily to prevent short circuits between positive and negative electrodes while allowing ions to pass through.

### [Positive electrode plate]

The positive electrode plate includes a positive electrode current collector and a positive electrode film layer disposed on at least one surface of the positive electrode current collector, where the positive electrode film layer includes the positive electrode active material according to the first aspect of this application.

As an example, the positive electrode current collector has two opposite surfaces in its thickness direction, and the positive electrode film layer is disposed on either or both of the two opposite surfaces of the positive electrode current collector.

In some embodiments, the positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material (such as aluminum, aluminum alloy, nickel, nickel alloy, titanium, titanium alloy, silver, and silver alloy) on a polymer material substrate (such as polypropylene (PP), polyethylene terephthalate (PET), polybutylene terephthalate (PBT), polystyrene (PS), and polyethylene (PE)).

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode film layer further optionally includes a conductive agent. As an example, the conductive agent may include at least one of superconducting carbon, acetylene black, carbon black, Ketjen black, carbon dots, carbon nanotubes, graphene, and carbon nanofiber.

In some embodiments, the positive electrode plate can be prepared in the following method: The components used for preparing the positive electrode plate, such as the positive electrode active material, the conductive agent, the binder, and any other components, are dispersed in a solvent (for example, N-methylpyrrolidone) to form a positive electrode slurry; and the positive electrode slurry is applied onto the positive electrode current collector, followed by processes such as drying and cold pressing, to obtain the positive electrode plate.

### [Negative electrode plate]

The negative electrode plate includes a negative electrode current collector and a negative electrode film layer disposed on at least one surface of the negative electrode current collector, where the negative electrode film layer includes a negative electrode active material.

As an example, the negative electrode current collector has two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, as a metal foil, a copper foil may be used. The composite current collector may include a polymer material substrate and a metal layer formed on at least one surface of the polymer material substrate. The composite current collector may be formed by forming a metal material (such as copper, copper alloy, nickel, nickel alloy, titanium, titanium alloy, silver, and silver alloy) on a polymer material substrate (such as polypropylene (PP), polyethylene terephthalate (PET), polybutylene terephthalate (PBT), polystyrene (PS), and polyethylene (PE)).

In some embodiments, the negative electrode active material may be a negative electrode active material known in the art for batteries. As an example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, this application is not limited to these materials, and other conventional materials that can be used as negative electrode active materials for batteries may also be used. These negative electrode active materials may be used alone or in combination of two or more.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other additives such as thickeners (for example, sodium carboxymethyl cellulose (CMC-Na)).

In some embodiments, the negative electrode plate can be prepared in the following steps: The components used for preparing the negative electrode plate, such as the negative electrode active material, the conductive agent, the binder, and any other components, are dispersed in a solvent (for example, deionized water) to form a negative electrode slurry; and the negative electrode slurry is applied onto the negative electrode current collector, followed by processes such as drying and cold pressing, to obtain the negative electrode plate.

### [Electrolyte]

The electrolyte serves to conduct ions between the positive electrode plate and the negative electrode plate. This type of the electrolyte can be specifically limited in this application and can be selected according to needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalate)borate, lithium bis(oxalate)borate, lithium difluoro(bis(oxalate))phosphate, and lithium tetrafluoro(oxalate)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the liquid electrolyte further optionally includes an additive. For example, the additive may include a negative electrode film-forming additive, a positive electrode film-forming additive, and an additive capable of improving some performance of the battery, for example, an additive for improving the overcharge performance of the battery or an additive for improving the high-temperature performance or low-temperature performance of the battery.

### [Separator]

In some embodiments, the secondary battery further includes a separator. The type of the separator is not particularly limited in this application, and any well-known porous separator with good chemical and mechanical stability can be selected.

In some embodiments, a material of the separator may be selected from at least one of glass fiber, non-woven fabric, polyethylene, polypropylene, and polyvinylidene fluoride. The separator may be a single-layer film or a multi-layer composite film, with no particular restriction. When the separator is a multi-layer composite film, the materials of the layers may be the same or different, with no particular restriction.

In some embodiments, the positive electrode plate, the negative electrode plate, and the separator can be formed into an electrode assembly through a winding process or a lamination process.

In some embodiments, the secondary battery may include an outer package. The outer package may be used to encapsulate the electrode assembly and the electrolyte.

In some embodiments, the outer package of the secondary battery may be a hard shell, such as a hard plastic shell, an aluminum shell, or a steel shell. The outer package of the secondary battery may alternatively be a soft package, for example, a soft pouch. A material of the soft package may be plastic. As the plastic, polypropylene, polybutylene terephthalate, polybutylene succinate, and the like may be listed.

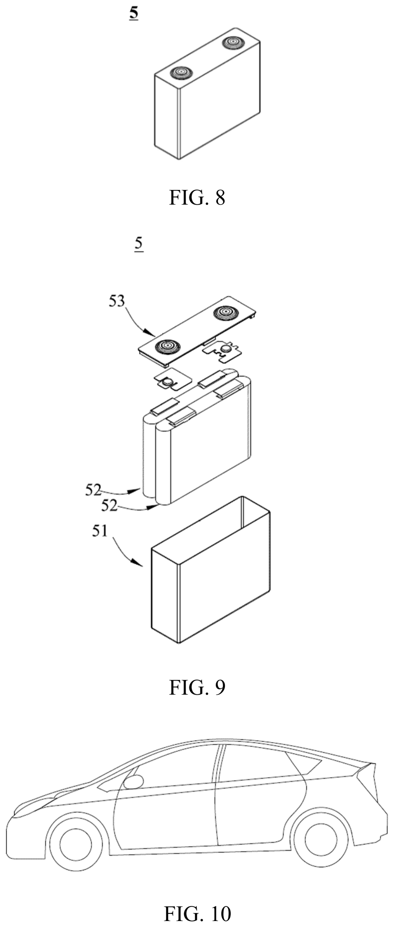

The shape of the secondary battery is not particularly limited, which may be cylindrical, rectangular, or of any other shapes. For example, FIG. 8 shows a secondary battery 5 with a rectangular structure as an example.

In some embodiments, referring to FIG. 9, the outer package may include a housing 51 and a cover plate 53. The housing 51 may include a bottom plate and side plates connected to the bottom plate. The bottom plate and the side plates enclose an accommodating cavity. The housing 51 has an opening in communication with the accommodating cavity. The cover plate 53 can cover the opening to close the accommodating cavity. The positive electrode plate, the negative electrode plate, and the separator can be formed into an electrode assembly 52 through a winding process or a lamination process. The electrode assembly 52 is encapsulated in the accommodating cavity. The electrolyte infiltrates into the electrode assembly 52. The secondary battery 5 may include one or more electrode assemblies 52, and those skilled in the art may make choices based on specific actual requirements.

Additionally, this application further provides an electric apparatus. The electric apparatus includes the secondary battery provided by this application. The secondary battery can be used as a power source for the electric apparatus or an energy storage unit for the electric apparatus. The electric apparatus may include mobile devices (for example, mobile phones and laptops), electric vehicles (for example, battery electric vehicles, hybrid electric vehicles, plug-in hybrid electric vehicles, electric bicycles, electric scooters, electric golf carts, and electric trucks), electric trains, ships and satellites, energy storage systems, and the like, but is not limited thereto.

As the electric apparatus, the secondary battery can be selected according to its usage requirements.

FIG. 10 shows an electric apparatus as an example. The electric apparatus is a battery electric vehicle, a hybrid electric vehicle, or a plug-in hybrid electric vehicle.

As another example, the apparatus may be a mobile phone, a tablet computer, a laptop, or the like. Such apparatus is generally required to be light and thin and may use a secondary battery as its power source.

### Examples

Examples of this application are described below. The examples described below are illustrative and are only used to explain this application and should not be construed as limiting this application. Examples whose technologies or conditions are not specified are made in accordance with technologies or conditions described in literature in the field or made in accordance with product instructions. The reagents or instruments used are all conventional products that are commercially available if no manufacturer is indicated.

### I Preparation method

### Example 1

### (1) Preparation of positive electrode active material

Nickel sulfate, cobalt sulfate, and manganese sulfate were prepared into a 2 mol/L metal salt solution with a molar ratio of Ni, Co, and Mn elements of 0.95:0.04:0.01. Then, the metal salt solution, 8 mol/L ammonia water, and 5 mol/L NaOH solution were continuously added to a reaction kettle for reaction. During reaction, a pH value was controlled to be 11.30, an ammonia concentration was controlled to be 4.0 g/L, a reaction duration was controlled to be 20 h, and a stirring velocity was controlled to be 300 r/min. A hydroxide coprecipitation method was used to prepare a positive electrode active material precursor (Ni_{0.95}Co_{0.04}Mn_{0.01}(OH)₂).

The prepared positive electrode active material precursor Ni_{0.95}Co_{0.04}Mn_{0.01}(OH)₂, a lithium salt LiOH·H₂O, and a flux K₂SO₄ were mixed well at a molar ratio of 1:1.05:0.10. The mixed powder was then placed in a corundum porcelain boat and the corundum porcelain boat was then placed into a tube furnace. Pure oxygen was filled at a flow rate of 0.2 L/min. Then, the corundum porcelain boat was heated to 650°C at a heating velocity of 5°C/min, maintained at 650°C for 12 hours, and then cooled to room temperature at a cooling velocity of 5°C/min. Then, the cooled powder was taken out, mechanically crushed, and then added in deionized water to dissolve K₂SO₄, filtered, and washed once more, where a washing temperature was 8°C, and a washing duration was 10 minutes. The resulting product was washed twice and then filtered again to obtain an intermediate product.

The intermediate product was dried in a blast drying oven at 60°C. The dried powder was placed in the corundum porcelain boat again, and the corundum porcelain boat was then placed into the tube furnace. Pure oxygen was filled at a flow rate of 0.2 L/min. Then, the corundum porcelain boat was heated to 500°C at a heating velocity of 5°C/min, maintained at 500°C for 2 hours, and then cooled to room temperature at a cooling velocity of 5°C/min to prepare a positive electrode active material. A cross-sectional diameter of a pore structure of the positive electrode active material was 100 nm, a cross-sectional porosity of the positive electrode active material was 6.2%, a specific surface area of the positive electrode active material was 2.0 m²/g, the longest connected distance of pores of the positive electrode active material was 3.0 µm, a particle size of primary particles of the positive electrode active material was 120 nm, a particle size of secondary particles of the positive electrode active material was 4 µm, and a tap density of the positive electrode active material was 2.1 g/cm³.

### (2) Preparation of positive electrode plate

The above positive electrode active material, a conductive agent carbon black, and a binder polyvinylidene fluoride (PVDF) were added to N-methylpyrrolidone at a mass ratio of 97:1:2, and mixed and stirred for 0.5-6 h to obtain a positive electrode slurry. The positive electrode slurry was then evenly applied onto a positive electrode current collector aluminum foil to prepare a positive electrode film layer, followed by drying, cold pressing, and cutting, to obtain a positive electrode plate.

### (3) Preparation of negative electrode plate

The negative electrode plate was a lithium sheet.

### (4) Electrolyte

In an argon atmosphere glove box (H₂O < 0.1 ppm, O₂ < 0.1 ppm), a lithium salt LiPF₆ was dissolved in a solvent formed by organic solvents dimethyl carbonate/ethylene carbonate (at a volume ratio of 1:1). The resulting solution was stirred well to obtain an electrolyte where a concentration of the lithium salt concentration was 1 mol/L.

### (5) Separator

A polypropylene film was used as a separator.

### (6) Preparation of button battery

In an argon atmosphere glove box (H₂O < 0.1 ppm, O₂ < 0.1 ppm), the positive electrode plate, the separator, the electrolyte, and the lithium sheet were assembled in sequence to form a button battery in Example 1.

### (7) Preparation of battery

The positive electrode plate, the separator, and the negative electrode plate were stacked in sequence, where the separator was disposed between the positive and negative electrode plates to provide isolation. Then, the resulting stack was wound to obtain a jelly roll. Tabs were welded to the jelly roll. The jelly roll was then placed in an aluminum shell and baked at 80°C to remove water, followed by electrolyte injection, and sealing, to obtain an uncharged battery. The uncharged battery was then subjected to processes such as standing, hot and cold pressing, formation, shaping, and capacity testing to obtain a lithium battery product in Example 1.

In Examples 2 to 5, the molar ratio of the flux to the positive electrode active material precursor was adjusted, with other steps identical to those in Example 1; and specific parameters were shown in Table 1.

In Example 6, the type of the flux was adjusted, with other steps identical to those in Example 1; and specific parameters were shown in Table 1.

In Examples 7, 8, and 10 to 12, the temperature of the water washing was adjusted, with other steps identical to those in Example 1; and specific parameters were shown in Table 1.

In Example 9, the type of the positive electrode active material precursor was adjusted to Ni_{0.83}Co_{0.12}Mn_{0.05}(OH)₂, with other steps identical to those in Example 1; and specific parameters were shown in Table 1.

**Table 1**

| No. | Preparation process | | |
|---|---|---|---|
| | Calcination reaction | | Temperature of water washing (°C) |
| | Flux | Molar ratio of flux to positive electrode active material precursor | |
| Example 1 | Potassium sulfate | 0.1 | 8 |
| Example 2 | Potassium sulfate | 0.08 | 8 |
| Example 3 | Potassium sulfate | 0.2 | 8 |
| Example 4 | Potassium sulfate | 0.3 | 8 |
| Example 5 | Potassium sulfate | 0.05 | 8 |
| Example 6 | Potassium acetate | 0.1 | 8 |
| Example 7 | Potassium sulfate | 0.1 | 15 |
| Example 8 | Potassium sulfate | 0.1 | 25 |
| Example 9 | Potassium sulfate | 0.1 | 8 |
| Example 10 | Potassium sulfate | 0.1 | 4 |
| Example 11 | Potassium sulfate | 0.1 | 10 |
| Example 12 | Potassium sulfate | 0.1 | 2 |

### Comparative Example 1

A preparation method of a battery in Comparative Example 1 was similar to the preparation method of the battery in Example 1, but a preparation method of a positive electrode active material was as follows:

A positive electrode active material precursor Ni_{0.95}Co_{0.04}Mn_{0.1}(OH)₂ and a lithium salt LiOH·H₂O were mixed well at a molar ratio of 1:1.05. The mixed powder was then placed in a corundum porcelain boat, and the corundum porcelain boat was then placed into a tube furnace. Pure oxygen was filled at a flow rate of 0.2 L/min. Then, the corundum porcelain boat was heated to 650°C at a heating velocity of 5°C/min, maintained at 650°C for 12 hours, and then cooled to room temperature at a cooling velocity of 5°C/min to obtain a positive electrode active material. A cross-sectional porosity of the positive electrode active material was 1.90%, a specific surface area of the positive electrode active material was 0.3 m²/g, a particle size of primary particles of the positive electrode active material was 120 nm, a particle size of secondary particles of the positive electrode active material was 4 µm, and a tap density of the positive electrode active material was 2.8 g/cm³.

Preparation methods of a positive electrode active material and a battery in Comparative Example 2 were similar to those in Comparative Example 1, but a positive electrode active material precursor was Ni_{0.83}Co_{0.12}Mn_{0.05}(OH)₂.

### II. Performance test

### (1) Test of first-cycle coulombic efficiency

At 2.8 V to 4.25 V, a button battery was charged to 4.3 V at 0.1C, then charged at a constant voltage of 4.3 V until the current was less than or equal to 0.05 mA, and left standing for 2 min. A charge capacity at this point was recorded as C0. Then, the button battery was discharged to 2.8 V at 0.1C. A discharge capacity at this point was recorded as an initial specific capacity D0. The first-cycle coulombic efficiency was calculated as D0 / C0*100%.

### (2) Test of specific capacity

In an environment at a constant temperature of 25°C, the battery was left standing for 5 min, discharged to 2.8 V at 1/3C, left standing for 5 min, charged to 4.25 V at 1/3C, then charged at a constant voltage of 4.25 V until the current was less than or equal to 0.05C, left standing for 5 minutes, and then discharged to 2.8 V at 1/3C. A discharge capacity at this point was recorded as the initial specific capacity D0.

(3) Test of low-temperature direct-current internal resistance

In an environment at a constant temperature of 25°C, the battery was left standing for 5 min, discharged to 2.8 V at 1/3C, left standing for 5 min, charged to 4.25 V at 1/3C, then charged at a constant voltage of 4.25 V until the current was less than or equal to 0.05C, left standing for 5 min, and then discharged to 2.8 V at 1/3C. A discharge capacity at this point was recorded as D0.

In an environment at a constant temperature of 25°C, the battery was left standing for 30 min, charged to 4.25 V at a current of 1/3D0, then charged at a constant voltage of 4.25 V until the current was less than or equal to 0.05D0, left standing for 30 min, then discharged to a capacity position of 0.5D0 at a current of 1/3D0, and left standing for 10 min.

In an environment at a constant temperature of -25°C, the battery was left standing for 120 min and discharged at a current of 0.36D0 for 10s. A voltage change ΔU at this point was recorded. According to the Ohm's formula, direct-current internal resistance R50% at 50% SOC under -25°C was calculated as ΔU / (0.36D0). When this value was lower, the kinetic performance of the battery was better.

### (4) Test of cycling capacity retention rate of battery

At 45°C, the battery was charged to 4.25 V at a constant current of 1C, then charged at a constant voltage of 4.25 V until the current dropped to 0.05C, and discharged to 2.8 V at a constant current of 1C to obtain a first-cycle discharge specific capacity (Cd1). The battery was repeatedly charged and discharged to the 300th cycle in such way to obtain a discharge specific capacity after n cycles of the lithium-ion battery was recorded as Cdn. A capacity retention rate Reten% was equal to a discharge specific capacity after n cycles (Cdn) / first-cycle discharge specific capacity (Cd1).

### III. Analysis of test results for Examples and Comparative Examples

Batteries of examples and comparative examples were prepared according to the above methods, and various performance parameters were measured. The results were shown in Tables 2 and 3.

**Table 2**

| No. | Positive electrode active material | | | | | | | |
|---|---|---|---|---|---|---|---|---|
| | Component | Longest connected distance of pores (µm) | Cross-sectional diameter of pores (nm) | Cross-sectional porosity (%) | Po(C64)/Po(C100) | Po(C36)/Po(C100) | Tap density (g/cm³) | Residual lithium content (ppm) |
| Example 1 | LiNi_{0.95}Co_{0.04}Mn_{0.01}O₂ | 3 | 100 | 6.20% | 1.18 | 1.37 | 2.1 | 1850 |
| Example 2 | LiNi_{0.95}Co_{0.04}Mn_{0.01}O₂ | 2 | 20 | 4.00% | 1.1 | 1.2 | 2.3 | 1230 |
| Example 3 | LiNi_{0.95}Co_{0.04}Mn_{0.01}O₂ | 4 | 200 | 9.00% | 1.28 | 1.52 | 1.7 | 2000 |
| Example 4 | LiNi_{0.95}Co_{0.04}Mn_{0.01}O₂ | 4.3 | 330 | 11.50% | 1.46 | 1.97 | 1.6 | 3100 |
| Example 5 | LiNi_{0.95}Co_{0.04}Mn_{0.01}O₂ | 1.3 | 15 | 3.30% | 1.05 | 1.13 | 2.5 | 1120 |
| Example 6 | LiNi_{0.95}Co_{0.04}Mn_{0.01}O₂ | 2.6 | 80 | 5.60% | 1.15 | 1.31 | 2.2 | 1800 |
| Example 7 | LiNi_{0.95}Co_{0.04}Mn_{0.01}O₂ | 3.3 | 210 | 9.20% | 1.23 | 1.29 | 1.6 | 910 |
| Example 8 | LiNi_{0.95}Co_{0.04}Mn_{0.01}O₂ | 3.5 | 240 | 9.90% | 1.3 | 1.32 | 1.5 | 750 |
| Example 9 | LiNi_{0.83}Co_{0.12}Mn_{0.05}O₂ | 3 | 100 | 6.20% | 1.23 | 1.44 | 2.3 | 1850 |
| Example 10 | LiNi_{0.95}Co_{0.04}Mn_{0.01}O₂ | 2.2 | 63 | 5.30% | 1.13 | 1.29 | 2.2 | 1980 |
| Example 11 | LiNi_{0.95}Co_{0.04}Mn_{0.01}O₂ | 3.6 | 160 | 8.70% | 1.21 | 1.36 | 1.8 | 1360 |
| Example 12 | LiNi_{0.95}Co_{0.04}Mn_{0.01}O₂ | 1.7 | 18 | 3.80% | 1.07 | 1.17 | 2.4 | 2090 |
| Comparative Example 1 | LiNi_{0.95}Co_{0.04}Mn_{0.01}O₂ | 0.1 | 3 | 1.90% | 1.02 | 1.02 | 2.8 | 4050 |
| Comparative Example 2 | LiNi_{0.83}Co_{0.12}Mn_{0.05}O₂ | 0.2 | 8 | 2.10% | 1 | 1.01 | 2.8 | 2300 |

**Table 3**

| No. | Battery | | | |
|---|---|---|---|---|
| | First-cycle coulombic efficiency | Specific capacity (mAh/g) | Direct-current internal resistance (mΩ) | Cycling capacity retention rate |
| Example 1 | 92.20% | 235.3 | 4450 | 83.90% |
| Example 2 | 91.30% | 232.2 | 4750 | 82.80% |
| Example 3 | 92.80% | 236 | 4210 | 81.00% |
| Example 4 | 92.70% | 236.8 | 3920 | 77.30% |
| Example 5 | 91.80% | 230.3 | 4980 | 81.90% |
| Example 6 | 92.00% | 234.6 | 4560 | 83.30% |
| Example 7 | 90.60% | 227.8 | 5560 | 78.00% |
| Example 8 | 90.20% | 226.2 | 5810 | 76.20% |
| Example 9 | 94.30% | 216.2 | 3790 | 87.80% |
| Example 10 | 92.10% | 234 | 4620 | 83.50% |
| Example 11 | 92.40% | 235.7 | 4300 | 81.30% |
| Example 12 | 91.50% | 230.9 | 4850 | 80.80% |
| Comparative Example 1 | 87.80% | 224.3 | 4960 | 74.30% |
| Comparative Example 2 | 88.50% | 197.5 | 4060 | 80.00% |

FIG. 1 is a scanning electron microscope image of a cross-section of a positive electrode active material in Example 9. FIG. 2 is a scanning electron microscope image of a cross-section of a positive electrode active material in Comparative Example 2. From the scanning electron microscope images, it can be seen that the positive electrode active material provided by this disclosure is an agglomerate of primary particles, internally containing pores located between the primary particles. From FIGs. 1 and 2 and Table 1, it can be seen that the positive electrode active material provided by this disclosure has a higher cross-sectional porosity and a larger cross-sectional diameter of the pores inside compared to the positive electrode active material in the prior art, allowing the internal pores to be interconnected and have a long connected distance.

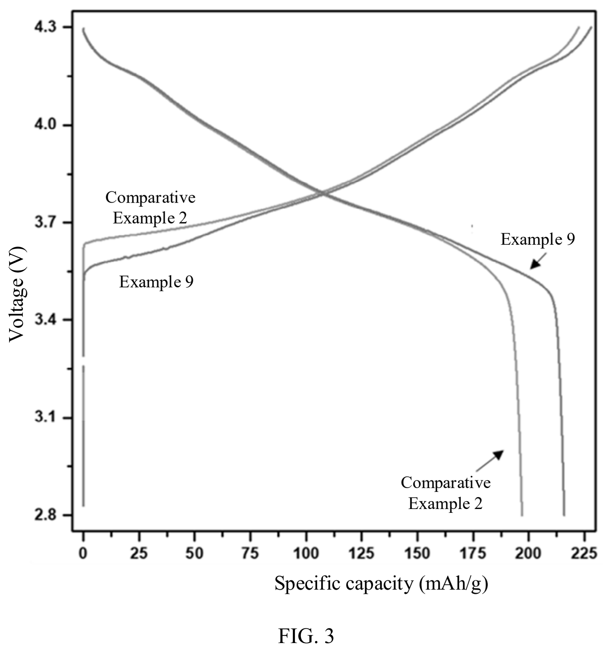

From the comparison of the examples and comparative examples in FIG. 3 and Tables 2 and 3, it can be seen that compared to the positive electrode active material with the same components in the prior art, the positive electrode active material provided by this disclosure allows the battery to have a high specific capacity.

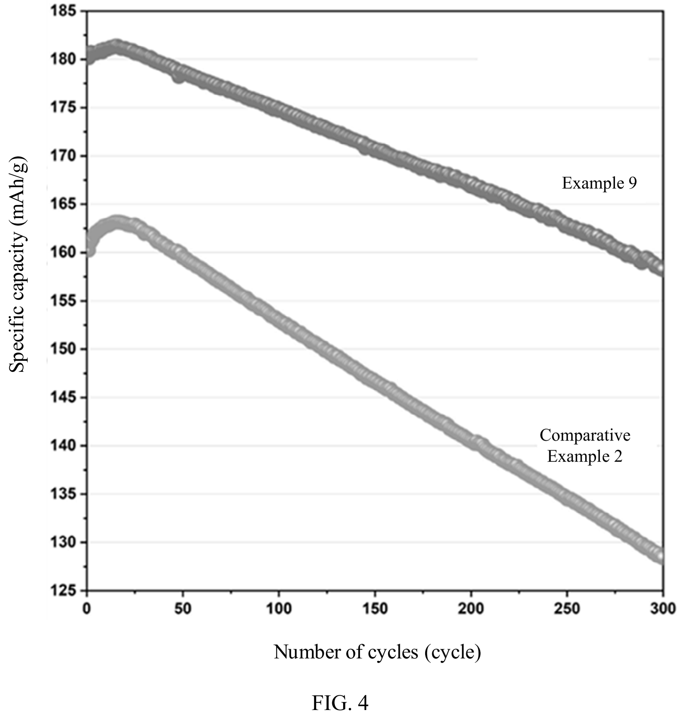

FIG. 4 is a comparison chart of cycling stability of batteries in Example 9 and Comparative Example 2. FIG. 5 is a scanning electron microscope image of a cross-section of a positive electrode plate in Example 9 after 300 cycles during testing. FIG. 6 is a scanning electron microscope image of a cross-section of a positive electrode plate in Comparative Example 2 after 300 cycles during testing. Severe particle fragmentation and morphological collapse of the positive electrode active material in Comparative Example 2 can be observed at the arrow. From the comparison of the examples and comparative examples in FIGs. 4 to 6 and Tables 2 and 3, it can be seen that compared to the positive electrode active material with the same components in the prior art, the positive electrode active material provided by this disclosure allows the battery to have high cycling stability. In the prior art, after 300 cycles, the positive electrode active material with the same components shows obvious cracks internally, leading to severe fragmentation of the secondary particles of the positive electrode active material. In contrast, the positive electrode active material provided by this disclosure shows no significant change in particle morphology after 300 cycles.

FIG. 7 is an analysis diagram of cross-sectional porosities of positive electrode active materials in Comparative Example 2 and Example 9 in different concentric circle area ranges, where figures 1A to 1F in FIG. 7 are cross-sectional images of the positive electrode active material in Comparative Example 2 within 100%, 81%, 64%, 49%, 36%, and 25% concentric circle ranges respectively; and figures 2A to 2F are cross-sectional images of the positive electrode active material in Example 9 within 100%, 81%, 64%, 49%, 36%, and 25% concentric circle ranges respectively. The cross-sectional porosities of the positive electrode active material in Comparative Example 2 within the 100%, 81%, 64%, 49%, 36%, and 25% concentric circle ranges are 2.08%, 2.04%, 2.08%, 2.08%, 2.10%, and 1.94% respectively. The cross-sectional porosities of the positive electrode active material in Example 9 within the 100%, 81%, 64%, 49%, 36%, and 25% concentric circle ranges are 6.25%, 7.29%, 7.71%, 8.31%, 8.98%, and 9.60% respectively. From the comparison of the examples and comparative examples in FIG. 7 and Table 1, it can be seen that the positive electrode active material provided by this disclosure differs from the positive electrode active material in the prior art and has a porosity decreasing along a direction from a geometric center of the positive electrode active material to a surface of the positive electrode active material. This helps to further improve the diffusion and migration of lithium ions within the positive electrode active material, increase the capacity of the battery, and helps to maintain the morphological and structural stability of the positive electrode active material during cycling.

It should be noted that this application is not limited to the above embodiments. The above embodiments are merely examples, and the embodiments having substantially the same technical concept and achieving the same effects within the scope of the technical solutions of this application are included in the technical scope of this application. Furthermore, without departing from the essence of this application, various modifications that can be conceived by those skilled in the art and other forms constructed by combining some of the constituent elements of the embodiments are also included in the scope of this application.

## Claims

1. A positive electrode active material, **characterized in that** the positive electrode active material is an agglomerate of primary particles, wherein the positive electrode active material internally contains pores located between the primary particles, and the longest connected distance of the pores is not less than 0.5 µm, optionally 1 µm to 5 µm.

2. The positive electrode active material according to claim 1, **characterized in that** a cross-sectional diameter of the pores is 10 nm to 350 nm, optionally 20 nm to 200 nm.

3. The positive electrode active material according to claim 1 or 2, **characterized in that** a cross-sectional porosity of the positive electrode active material is 3% to 12%, optionally 4% to 9%.

4. The positive electrode active material according to any one of claims 1 to 3, **characterized in that** a porosity of the positive electrode active material decreases along a direction from a geometric center of the positive electrode active material to a surface of the positive electrode active material.

5. The positive electrode active material according to any one of claims 1 to 4, **characterized in that** a relationship between a cross-sectional porosity Po(C100) within a 100% concentric circle range of the positive electrode active material and a cross-sectional porosity Po(C64) within a 64% concentric circle range on a same cross-section satisfies Po(C64)/Po(C100) ≥ 1.10; and/or
a relationship between a cross-sectional porosity Po(C100) within a 100% concentric circle range of the positive electrode active material and a cross-sectional porosity Po(C36) within a 36% concentric circle range on a same cross-section satisfies Po(C36)/Po(C100) ≥ 1.20;
wherein the 100% concentric circle range of the positive electrode active material is a region within a distance of r from the geometric center of the positive electrode active material;
the 64% concentric circle range of the positive electrode active material is a region within a distance of 0.8r from the geometric center of the positive electrode active material; and
the 36% concentric circle range of the positive electrode active material is a region within a distance of 0.6r from the geometric center of the positive electrode active material, wherein r represents a radius of the positive electrode active material.

6. The positive electrode active material according to any one of claims 1 to 5, **characterized in that** based on a total mass of the positive electrode active material, a residual lithium content of the positive electrode active material is 500 ppm to 3500 ppm, optionally 1000 ppm to 2100 ppm.

7. The positive electrode active material according to any one of claims 1 to 6, **characterized in that** a general formula of the positive electrode active material is as shown in Formula I:
LiₐNiₓM₁₋ₓO_{2-b} Formula I,
wherein M comprises at least one of Co, Mn, Al, Y, W, Ta, Mo, Ce, La, Zr, Sr, Y, Sb, W, Ti, Mg, Nb, K, and Ca; 0.5 ≤ a ≤ 1.2, 0.5 ≤ x < 1.0, and -0.1 ≤ b ≤ 0.1; and optionally, 0.8 ≤ a ≤ 1.2, and 0.8 ≤ x < 1.0.

8. The positive electrode active material according to any one of claims 1 to 7, **characterized in that** the positive electrode active material satisfies at least one of the following conditions:
(i) a specific surface area of the positive electrode active material is 0.4 cm²/g to 5 cm²/g;
(ii) an average particle size of the primary particles is 10 nm to 200 nm; and
(iii) a tap density of the positive electrode active material is 1.7 g/cm³ to 2.3 g/cm³.

9. A preparation method of a positive electrode active material, **characterized by** comprising:
mixing a positive electrode active material precursor, a lithium salt, and a flux for a sintering reaction to prepare the positive electrode active material, wherein
the positive electrode active material is an agglomerate of primary particles, the positive electrode active material internally contains pores located between the primary particles, and the longest connected distance of the pores is greater than 0.5 µm.

10. The preparation method according to claim 9, **characterized in that** the flux comprises an alkali metal salt, optionally one or more of alkali metal sulfates and alkali metal acetates; and optionally, the flux comprises one or more of potassium sulfate, lithium sulfate, sodium sulfate, potassium acetate, lithium acetate, and sodium acetate.

11. The preparation method according to claim 9 or 10, **characterized in that** a general formula of the positive electrode active material precursor is as shown in Formula II:
Ni_{y}M_{1-y}(OH)₂ Formula II,
wherein M comprises at least one of Co, Mn, Al, Y, W, Ta, Mo, Ce, La, Zr, Sr, Y, Sb, W, Ti, Mg, Nb, K, and Ca; and 0.5 ≤ y < 1.0, optionally 0.8 ≤ y < 1.0.

12. The preparation method according to any one of claims 9 to 11, **characterized in that** a molar ratio of the flux to the positive electrode active material precursor is (0.05 to 0.3):1, optionally (0.08 to 0.2):1.

13. The preparation method according to any one of claims 9 to 12, **characterized in that** a temperature of the sintering reaction is 500°C to 800°C, optionally 650°C to 800°C; and/or
a duration of the sintering reaction is 10 h to 15 h, optionally 12 h to 14 h.

14. The preparation method according to any one of claims 9 to 13, **characterized in that** the preparation method of the positive electrode active material specifically comprises:
under an oxygen atmosphere, mixing the positive electrode active material precursor, the lithium salt, and the flux for the sintering reaction, followed by water washing to obtain an intermediate product; and
under the oxygen atmosphere, calcining the intermediate product to prepare the positive electrode active material.

15. The preparation method according to claim 14, **characterized in that** a temperature of the water washing is 4°C to 10°C.

16. The preparation method according to claim 14 or 15, **characterized in that** a temperature of the calcination is 500°C to 650°C, and/or a duration of the calcination is 2 h to 5 h.

17. A secondary battery, **characterized by** comprising a positive electrode plate, wherein the positive electrode plate comprises the positive electrode active material according to any one of claims 1 to 8 or a positive electrode active material prepared using the preparation method according to any one of claims 9 to 16.

18. An electric apparatus, **characterized by** comprising the secondary battery according to claim 17.
